(19) Europäisches Patentamt
European Patent Office
Office européen des brevets

(11) EP 4 549 782 A1

(12) **EUROPEAN PATENT APPLICATION**
published in accordance with Art. 153(4) EPC

(43) Date of publication:
**07.05.2025 Bulletin 2025/19**

(21) Application number: **23830753.2**

(22) Date of filing: **27.03.2023**

(51) International Patent Classification (IPC):
***F16H 55/06*** (2006.01) ***B25J 19/00*** (2006.01)
***C08G 75/02*** (2016.01) ***C08K 5/541*** (2006.01)
***C08L 1/02*** (2006.01) ***C08L 81/02*** (2006.01)

(52) Cooperative Patent Classification (CPC):
**B25J 19/00; C08G 75/02; C08K 5/541; C08L 1/02; C08L 81/02; F16H 55/06**

(86) International application number:
**PCT/JP2023/012342**

(87) International publication number:
**WO 2024/004299 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.07.2022 JP 2022107384**

(71) Applicant: **DIC Corporation**
**Tokyo 174-8520 (JP)**

(72) Inventors:
- **TAKAHASHI, Yoshihisa**
  **Ichihara-shi, Chiba 290-8585 (JP)**
- **MORI, Kotaro**
  **Tokyo 103-8233 (JP)**
- **KUROKAWA, Ryuhei**
  **Ichihara-shi, Chiba 290-8585 (JP)**
- **KURATA, Kunito**
  **Ichihara-shi, Chiba 290-8585 (JP)**

(74) Representative: **Scott, Stephen John**
**YUJA IP LAW**
**4 Centenary House**
**The Avenue**
**York YO30 6AU (GB)**

(54) **GEAR, WORM GEAR, AND ROBOT**

(57) The present disclosure aims to provide a gear, a worm gear, and a robot, which have a low dimensional change rate due to thermal expansion and water absorption and have excellent durability and dimensional accuracy under high-temperature and high-humidity conditions even when the gear is composed of a resin. The present disclosure provides a gear having a first toothed portion provided on the outer circumference thereof. The gear contains a polyarylene sulfide resin as a constituent component. The polyarylene sulfide resin has a melt viscosity (V6) of 50 to 4,000 Pa-s.

EP 4 549 782 A1

FIG. 1

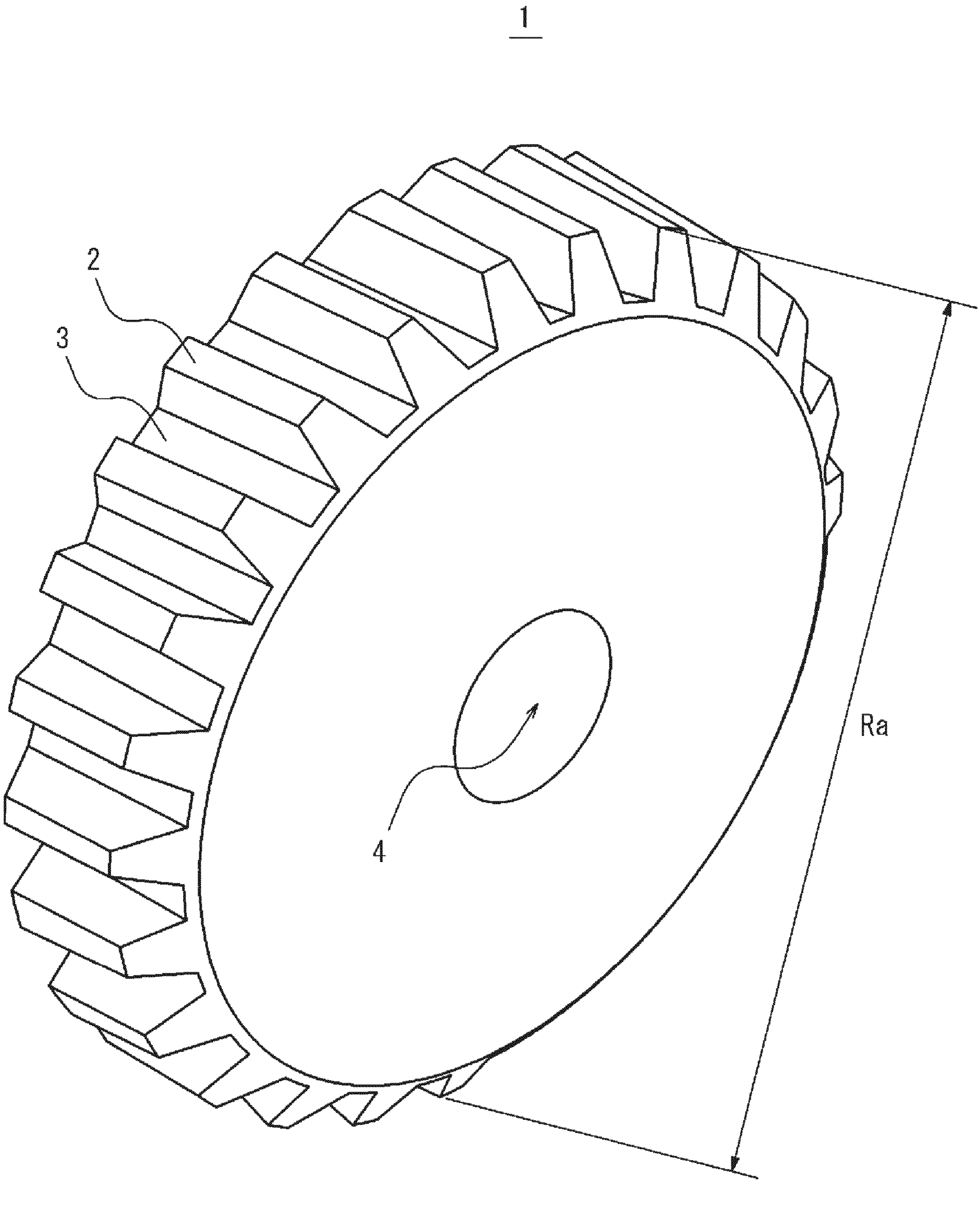

## Description

### Technical Field

The present disclosure relates to a gear, a worm gear, and a robot.

### Background Art

In recent years, POM or PA has been used as a material of sliding portions of gears or bearings, reflecting the need to replace conventional metal gears with resin gears from the viewpoint of weight reduction, maintenance savings (grease-less), or noise reduction of robots. For example, Patent Literature 1 discloses a resin gear containing a thermoplastic resin and cellulose nanofibers (hereinafter, also referred to as "CNFs") having an average fiber diameter of 1,000 nm or less. Patent Literature 2 discloses a gear having a metal core tube and an annular resin portion that is integrally provided on the outer circumferential surface of the core tube and has a plurality of gear teeth formed on its outer circumferential surface.

### Citation List

### Patent Literature

PTL 1: Japanese Unexamined Patent Application Publication No. 2020-108959
PTL 2: Japanese Unexamined Patent Application Publication No. 2016-064714

### Summary of Invention

### Technical Problem

Similar to conventional metal gears, resin gears are naturally required to have material properties, such as thermal stability, water absorbency, mechanical strength, and dimensional stability. However, techniques described in Patent Literatures 1 and 2 do not provide a resin gear that satisfies the requirements for durability and dimensional accuracy under high-temperature or high-humidity conditions. For example, in the technique described in Patent Literature 1, the CNFs themselves aggregate and thus are less likely to disperse in the thermoplastic resin, resulting in a problem of reduced mechanical strength or durability. In the technique described in Patent Literature 2, the gear teeth on the outer circumferential surface are made of a resin material containing a reinforcing material composed of soft fibers and a thermoplastic resin. However, the compatibility between the reinforcing material and the thermoplastic resin is not considered. Thus, the adhesion between the reinforcing material and the thermoplastic resin is poor. As a result, a gear having durability and dimensional accuracy sufficient for practical use under high-temperature or high-humidity conditions is not provided.

Accordingly, the present disclosure aims to provide a gear, a worm gear, and a robot, which have a low dimensional change rate due to heat and water absorption and have excellent durability and dimensional accuracy under high-temperature and high-humidity conditions even when the gear is composed of a resin.

### Solution to Problem

The inventors have conducted intensive studies on ways to solve the above problems and have found that the above problems could be solved by using a polyarylene sulfide resin (hereinafter, referred to as a "PAS resin") composition containing a specific PAS resin as a main component. This finding has led to the completion of the present invention. That is, the present disclosure is as described below.

[1] The present disclosure provides a gear having a first toothed portion provided on the outer circumference thereof, the gear containing a polyarylene sulfide resin as a constituent component, and the polyarylene sulfide resin having a melt viscosity (V6) of 50 to 4,000 Pa·s.

[2] In the gear described in [1], a dimensional change rate (%) due to a temperature change from 0°C to 80°C is represented by the following formula (I):

[Math. 1]

$$\text{Dimensional change rate (\%)} = \frac{L_{80} - L_0}{L_0} \times 100$$

(where in the formula (I), $L_{80}$ is a tip diameter of the gear at 80°C, and $L_0$ is the tip diameter of the gear at 0°C), and is 0.7% or less.

[3] The gear described in [1] or [2] further contains a cellulose nanofiber as the constituent component, in which the amount of the cellulose nanofiber is less than 0.5% by mass based on the total amount of the polyarylene sulfide resin and the cellulose nanofiber.

[4] The gear described in any one of [1] to [3] further contains a silane coupling agent as the constituent component.

[5] A worm gear includes the gear described in any one of [1] to [4], the gear serving as a worm wheel, and a worm having a second toothed portion configured to mesh with the first toothed portion of the gear,

in which the worm contains a polyarylene sulfide resin as a constituent component, and the polyarylene sulfide resin has a melt viscosity (V6) of 50 to 4,000 Pa·s.

[6] A gear system for a robot includes the worm gear described in [5].

[7] A robot includes the gear system for a robot described in [6].

Advantageous Effects of Invention

According to the present disclosure, there are provided a gear, a worm gear, and a robot, which have a low dimensional change rate due to heat and water absorption and have excellent durability and dimensional accuracy under high-temperature and high-humidity conditions.

According to the present disclosure, there is provided a worm wheel, a worm gear, or a robot in which the dimensional accuracy of the worm wheel or the worm gear is good, and durability and positioning are excellent.

Brief Description of Drawings

[Fig. 1] Fig. 1 is a schematic view illustrating an example of a worm wheel as an example of a gear according to an embodiment of the present disclosure.

[Fig. 2] Fig. 2 is a schematic view illustrating an example of a worm as an example of a gear according to an embodiment of the present disclosure. [Fig. 3] Fig. 3 is a schematic view illustrating an example of a configuration of a worm gear according to an embodiment of the present disclosure.

[Fig. 4] Fig. 4 is a schematic view of an arm mechanism for a robot, the arm mechanism having the worm gear illustrated in Fig. 3.

Description of Embodiments

While the following provides a detailed description of an embodiment of the present invention (hereinafter, referred to as a "present embodiment"), the present invention is not limited by the following description and may be implemented with various alterations within the scope thereof.

A gear of the present embodiment has a first toothed portion provided on its outer circumference, and contains, as a constituent component, a PAS resin having a melt viscosity (V6) of 50 to 4,000 Pa·s.

The gear of the present embodiment contains a PAS resin having predetermined properties and thus has a low dimensional change rate due to heat and water absorption and has excellent durability and dimensional accuracy under high-temperature and high-humidity conditions.

When the PAS resin having a melt viscosity (V6) of 50 Pa·s or higher is used, the durability of the entire gear can be improved because of the high strength of the PAS resin constituting the gear. The use of the PAS resin having a melt viscosity (V6) of 4,000 Pa·s or less makes it possible to fill the PAS resin up to tooth tips during injection molding, thereby improving the mold transferability for the gear and enabling the production of the gear having good appearance.

The phrase "contains, as a constituent component, a PAS resin" used herein indicates that the material constituting the gear contains the PAS resin. Thus, the PAS resin may be contained as a material constituting the gear. The material constituting the gear may be the PAS resin or a PAS resin composition containing the PAS resin as a main component.

In the present specification, the term "PAS resin composition containing a PAS resin as a main component"

indicates that the PAS resin is contained in an amount of 50% or more by mass based on the total amount (100% by mass) of the PAS resin composition.

The gear of the present embodiment contains the PAS resin and has a flat plate-shaped main body and a first toothed portion provided on the outer circumference (that is, radially outward) of the main body. Since the gear of the present embodiment has a low dimensional change rate due to heat and water absorption and has excellent durability and dimensional accuracy under high-temperature and high-humidity conditions, eccentricity or variations in tooth thickness are considered to be less likely to occur, thereby enabling a reduction in rattling during use.

A preferred embodiment of the gear of the present embodiment is a worm, a worm wheel, or a worm gear including a worm and a worm wheel having a tooth surface that meshes with the worm.

Common gears (cogwheels) are in rolling contact, whereas worm gears are in sliding contact. Thus, worm gears are excellent in quietness but disadvantageously generate heat. However, the gear of the present embodiment contains the PAS resin, and thus is excellent in quietness and heat resistance even without grease, and exhibits excellent performance for any of a gear that is in rolling contact and a worm gear. In particular, the gear of the present embodiment has a low dimensional change rate due to heat and water absorption and has excellent durability and dimensional accuracy under high-temperature and high-humidity conditions. Thus, when the gear of the present embodiment is used as a worm, a worm wheel, or a worm gear, the gear is considered to be effective in reducing eccentricity, unevenness in tooth thickness, and rattle during use.

The PAS resin constituting the gear of the present embodiment, a method for producing the PAS resin, and the PAS resin composition will be described below. Then a worm, a worm wheel, and a worm gear, which are preferred gears of the present embodiment, and a robot will be described in order with reference to the drawings.

(PAS Resin)

The PAS resin of the present embodiment is a resin having a melt viscosity (V6) of 50 to 4,000 Pa·s and having, as a repeating unit, a structure in which an aromatic ring and a sulfur atom are bonded. That is, the chemical structure of the PAS resin of the present embodiment has, as a repeating unit, a resin structure in which an aromatic ring and a sulfur atom are bonded. Specifically, the PAS resin of an embodiment is preferably a resin containing, as a repeating unit, a structural moiety represented by the following general formula (1):

[Chem. 1]

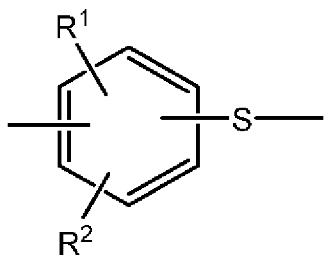

general formula (1)

(where in the general formula (1), $R^1$ and $R^2$ are each independently a hydrogen atom, an alkyl group having 1 to 4 carbon atoms, a nitro group, an amino group, a phenyl group, a methoxy group, or an ethoxy group) and, if necessary, a trifunctional structural moiety represented by the following general formula (2):

[Chem. 2]

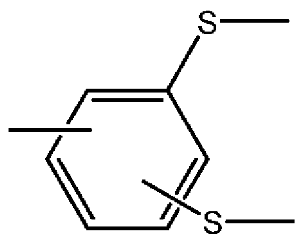

general formula (2).

The trifunctional structural moiety represented by the above general formula (2) is preferably in the range of 0.001 to 3 mol%, particularly preferably 0.01 to 1 mol%, based on the total amount by mole of the trifunctional structural moiety and other structural moieties.

With regard to the structural moiety represented by the general formula (1), in particular, each of $R^1$ and $R^2$ in the general formula (1) is preferably a hydrogen atom in terms of the mechanical strength of the PAS resin. In this case, examples of the structural moiety include a structural moiety bonded at the para-position represented by the following general formula (3); and a structural moiety bonded at the meta-position represented by the following general formula (4).

[Chem. 3]

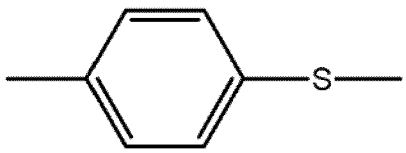

general formula (3)

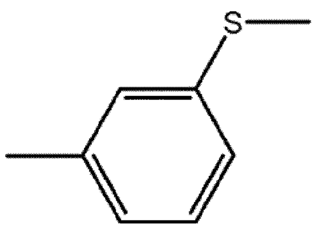

general formula (4)

Of these, the structural moiety represented by the general formula (1) is preferably a structure represented by the general formula (3) in which the sulfur atom to the aromatic ring in the repeating unit is bonded at the para-position, in terms of heat resistance and crystallinity of the PAS resin.

The PAS resin may contain, in addition to the structural moieties represented by the general formulae (1) and (2), structural moieties represented by the following general formulae (5) to (8):

[Chem. 4]

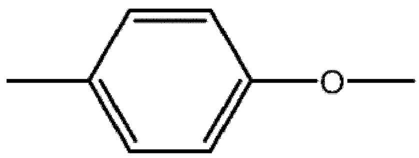

general formula (5)

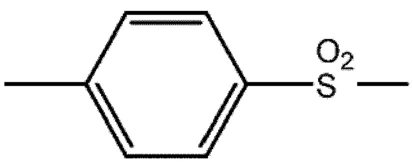

general formula (6)

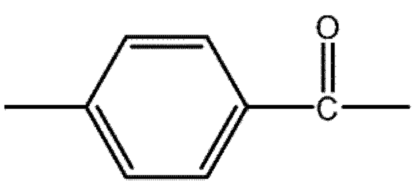

general formula (7)

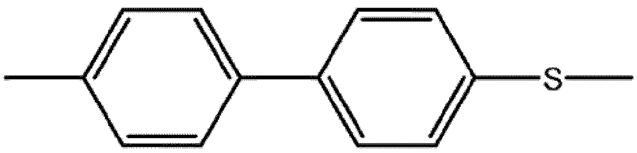

general formula (8)

in an amount of 30 mol% or less based on the total of the above structural moieties and the structural moieties represented by the general formulae (1) and (2). In particular, in the present embodiment, the structural moieties represented by the above general formulae (5) to (8) are preferably contained in an amount of 10 mol% or less in terms of the heat resistance and mechanical strength of the PAS resin. When the PAS resin contains the structural moieties represented by the above general formulae (5) to (8), the bonding mode thereof may be either a random copolymer or a block copolymer.

The PAS resin of the present embodiment may have a naphthyl sulfide bond and so forth in its molecular structure. The naphthyl sulfide bond and so forth are preferably contained in an amount of 3 mol% or less, particularly preferably 1 mol% or less, based on the total amount by mole of the naphthyl sulfide bond and so forth and other structural moieties.

The melt viscosity (V6) of the PAS resin of the present embodiment is in the range of 50 Pa·s or more and 4,000 Pa·s or less. The upper limit of the melt viscosity (V6) of the PAS resin of the present embodiment is preferably 2,000 Pa·s or less, more preferably 700 Pa·s or less, and still more preferably 300 Pa·s or less. The lower limit of the melt viscosity (V6) of the PAS resin of the present embodiment is preferably 70 Pa·s or more, more preferably 80 Pa·s or more, and still more preferably 90 Pa·s or more. The upper limit and the lower limit can be freely combined.

When the PAS resin having a melt viscosity (V6) in the range of 50 Pa·s or more and 4,000 Pa·s or less is used, it is possible to produce a gear having a good appearance and improved durability of the entire gear. When importance is placed on the appearance of the molded gear, the melt viscosity (V6) of the PAS resin is preferably 50 Pa·s or more and 300 Pa·s or less. When importance is placed on the durability of the gear, the melt viscosity (V6) of the PAS resin is preferably 90 Pa·s or more and 4,000 Pa·s or less.

The melt viscosity (V6) in the present specification is measured by using a flow tester, CFT-500D, manufactured by Shimadzu Corporation, and is a measured value of the melt viscosity measured after holding the PAS resin at 300°C, a load of $1.96 \times 10^6$ Pa, and L/D = 10 (mm)/1 (mm) for 6 minutes.

The PAS resin of the present embodiment preferably contains a carboxyl group in its molecule. The carboxyl group has reactivity with a coupling agent. Thus, when a coupling agent is further contained as a constituent component, the combined use with the coupling agent can exhibit the effect of improving the durability of the gear.

The amount of carboxy groups present in the molecular structure of the PAS resin of the present embodiment is preferably 10 μmol to 200 μmol per 1 g of the PAS resin, more preferably 20 μmol to 100 μmol per 1 g of the PAS resin, and still more preferably 20 μmol to 50 μmol per 1 g of the PAS resin.

In the present specification, the amount of carboxy groups contained in the PAS resin was measured with an FT-IR microspectrometer after preparing a pretreated sample as described in the Examples section.

The non-Newtonian index of the PAS resin of the present embodiment is preferably, but not particularly limited to, in the range of 0.90 or more and 2.00 or less. When a linear type PAS resin is used, the non-Newtonian index is preferably in the range of 0.90 or more, more preferably in the range of 0.95 or more, and preferably in the range of 1.50 or less, more preferably in the range of 1.20 or less. Such a PAS resin is excellent in mechanical properties, flowability, and abrasion resistance. In the present disclosure, the non-Newtonian index (N value) is a value calculated by measuring the shear rate (SR) and the shear stress (SS) with a Capirograph under the conditions including a temperature of the melting point + 20°C and a ratio of the orifice length (L) to the orifice diameter (D), L/D, of 40, and by using the following formula (II). A non-Newtonian index (N value) closer to 1 indicates a more linear structure. A higher non-Newtonian index (N value) indicates a more highly branched structure.

[Math. 2]

$$SR = K \cdot SS^{N}$$

[where in the above formula (II), SR is the shear rate ($sec^{-1}$), SS is the shear stress ($dyne/cm^2$), and K is a constant.]

The peak molecular weight (hereinafter, also referred to as "$M_{top}$") of the PAS resin of the present embodiment is preferably in the range of 30,000 to 80,000, more preferably in the range of 32,000 to 72,000, and still more preferably in the range of 35,000 to 46,000. The lower limit of $M_{top}$ of the PAS resin is preferably 30,000 or more, more preferably 32,000 or more, and still more preferably 35,000 or more. The upper limit of $M_{top}$ of the PAS resin is 80,000 or less, more preferably 72,000 or less, and still more preferably 46,000 or less. The upper limit and the lower limit can be freely combined.

The $M_w/M_{top}$ of the PAS resin of the present embodiment is preferably in the range of 0.80 to 1.70, more

preferably in the range of 0.90 to 1.30. When $M_w/M_{top}$ is in such a range, the workability of the PAS resin can be improved, and a good cavity balance can be improved. In the present specification, $M_w$ refers to the weight-average molecular weight measured by gel permeation chromatography, and $M_{top}$ refers to the average molecular weight (peak molecular weight) at the point of the maximum detection intensity of the chromatogram obtained from the measurement. $M_w/M_{top}$ indicates the distribution of the molecular weight of a measurement target. Usually, when this value is close to 1, the molecular weight distribution is narrow. As this value increases, the molecular weight distribution is broader.

In the present specification, a method for measuring the peak molecular weight is based on a value calculated as a polystyrene equivalent by gel permeation chromatography using polystyrene as a standard substance. The value of the number-average molecular weight or weight-average molecular weight varies depending on the baseline of the molecular weight distribution curve of gel permeation chromatography, whereas the value of the peak molecular weight is not affected by the baseline of the molecular weight distribution curve.

(Method for Producing PAS Resin)

A method for producing the PAS resin of the present embodiment is not particularly limited as long as the melt viscosity (V6) of the PAS resin is 50 Pa·s or more and 4,000 Pa·s or less. Examples of the production method include (production method 1) a method for polymerizing a dihalogenoaromatic compound in the presence of sulfur and sodium carbonate optionally with the addition of a polyhalogenoaromatic compound or another copolymerization component; (production method 2) a method for polymerizing a dihalogenoaromatic compound in the presence of a sulfidizing agent or the like in a polar solvent optionally with the addition of a polyhalogenoaromatic compound or another copolymerization component; (production method 3) a method for self-condensing p-chlorothiophenol optionally with the addition of another copolymerization component; and (production method 4) a method for melt-polymerizing a diiodoaromatic compound and elemental sulfur under reduced pressure in the presence of a polymerization inhibitor that may contain a functional group, such as a carboxy group or an amino group. Among these methods, the (production method 2) is preferred because of its versatility. During the reaction, an alkali metal salt of a carboxylic acid or a sulfonic acid, or an alkali hydroxide may be added to adjust the degree of polymerization. Among the above methods (production method 2), particularly preferred are those obtained by a method in which a water-containing sulfidizing agent is introduced into a heated mixture containing an organic polar solvent and a dihalogenoaromatic compound at a rate such that water can be removed from the reaction mixture, the dihalogenoaromatic compound and the sulfidizing agent optionally with the addition of a polyhalogenoaromatic compound are allowed to react with each other in the organic polar solvent, and the amount of water in the reaction system is controlled in the range of 0.02 to 0.5 mol per mole of the organic polar solvent (see Japanese Unexamined Patent Application Publication No. 07-228699); and a method in which a dihalogenoaromatic compound and, if necessary, a polyhalogenoaromatic compound or another copolymerization component are added in the presence of a solid alkali metal sulfide and an aprotic polar organic solvent, and an alkali metal hydrosulfide and an organic acid alkali metal salt are allowed to react with each other in such a manner that the organic acid alkali metal salt is in the range of 0.01 to 0.9 mol per mole of the sulfur sources while the amount of water in the reaction system is controlled in the range of 0.02 mol or less per mole of the aprotic organic solvent (see International Publication No. 20101058713). Specific examples of the dihalogenoaromatic compound include p-dihalobenzene, m-dihalobenzene, o-dihalobenzene, 2,5-dihalotoluene, 1,4-dihalonaphthalene, 1-methoxy-2,5-dihalobenzene, 4,4'-dihalobiphenyl, 3,5-dihalobenzoic acid, 2,4-dihalobenzoic acid, 2,5-dihalonitrobenzene, 2,4-dihalonitrobenzene, 2,4-dihaloanisole, p,p'-dihalodiphenyl ether, 4,4'-dihalobenzophenone, 4,4'-dihalodiphenyl sulfone, 4,4'-dihalodiphenyl sulfoxide, 4,4'-dihalodiphenyl sulfide, and a compound in which an alkyl group having 1 to 18 carbon atoms is attached to the aromatic ring of each of the above compounds. Examples of the polyhalogenoaromatic compound include 1,2,3-trihalobenzene, 1,2,4-trihalobenzene, 1,3,5-trihalobenzene, 1,2,3,5-tetrahalobenzene, 1,2,4,5-tetrahalobenzene, and 1,4,6-trihalonaphthalene. Each of the halogen atoms contained in the above compounds is preferably a chlorine atom or a bromine atom.

Examples of a post-treatment method for the PAS resin-containing reaction mixture prepared by the polymerization step include, but are not limited to, (post-treatment 1) a method in which after the completion of the polymerization reaction, the solvent is removed by evaporation under reduced pressure or normal pressure from the reaction mixture as it is or after the addition of an acid or a base, the solid remaining after the solvent removal is washed once, twice, or more times with a solvent, such as water, the reaction solvent (or an organic solvent that has equivalent solubility for low-molecular-weight polymers), acetone, methyl ethyl ketone, or an alcohol, and then neutralized, washed with water, filtered, and dried; (post-treatment 2) a method in which after the completion of the polymerization reaction, a solvent (a solvent that is soluble in the polymerization solvent used and is a poor solvent for at least the PAS resin), such as water, acetone, methyl ethyl ketone, an alcohol, an ether, a halogenated hydrocarbon, an aromatic hydrocarbon, or an aliphatic hydrocarbon, is added to the reaction mixture as a precipitating agent to precipitate solid products, such as the PAS resin and inorganic salts, and the solid products are then filtered, washed, and dried; (post-treatment 3) a method in which after the completion of the polymerization reaction, a reaction solvent (or an organic solvent that has equivalent solubility for low-molecular-weight polymers) is added to the reaction mixture, the mixture is stirred and filtered to remove the low-molecular-weight

polymers, and washing is performed once, twice, or more times with a solvent, such as water, acetone, methyl ethyl ketone, or an alcohol, followed by neutralization, washing with water, filtration, and drying; (post-treatment 4) a method in which after the completion of the polymerization reaction, water is added to the reaction mixture, and the resulting mixture is subjected to washing with water and filtration, optionally followed by acid treatment by the addition of an acid during the washing with water, and the resulting product is then dried; and (5) a method in which after the completion of the polymerization reaction, the reaction mixture is filtered and optionally washed once, twice, or more times with the reaction solvent, followed by washing with water, filtering, and drying.

In the post-treatment methods exemplified in (post-treatment 1) to (post-treatment 5), the PAS resin may be dried in a vacuum, in air, or in an inert gas atmosphere, such as nitrogen.

(PAS Resin Composition)

The gear of the present embodiment may contain the PAS resin as a PAS resin composition. The use of a PAS resin composition containing a PAS resin as a constituent component of the gear of the present embodiment makes it easy to impart desired material physical properties.

The melt viscosity (V6) of the PAS resin composition of the present embodiment is preferably in the range of 50 Pa·s or more and 4,000 Pa·s or less. The upper limit of the melt viscosity (V6) of the PAS resin composition of the present embodiment is preferably 2,000 Pa·s or less, more preferably 700 Pa·s or less, and still more preferably 300 Pa·s or less. The lower limit of the melt viscosity (V6) of the PAS resin of the present embodiment is preferably 70 Pa·s or more, more preferably 80 Pa·s or more, and still more preferably 90 Pa·s or more. The upper limit and the lower limit can be freely combined.

The use of the PAS resin composition having a viscosity of 50 Pa·s or more makes it possible to improve the durability of the entire gear because of its high gear strength or to reduce flashes during molding. The use of the PAS resin composition having a melt viscosity (V6) of 4,000 Pa·s or less makes it possible to fill the PAS resin composition up to tooth tips during injection molding, thereby improving the mold transferability for the gear and enabling the production of the gear having good appearance.

The PAS resin composition of the present embodiment preferably contains 50% to 100% by mass of the PAS resin, more preferably contains 60% to 95% by mass of the PAS resin, and still more preferably contains 70% to 95% by mass of the PAS resin, based on the total amount (100% by mass) of the PAS resin composition.

The PAS resin composition of the present embodiment may contain a filler as an optional component, as needed. As the filler, any known or commonly used material can be used as long as it does not impair the effects of the present disclosure. Examples thereof include fillers of various shapes, such as fibrous fillers and non-fibrous fillers, e.g., granular and plate-shaped fillers. Specifically, fibrous fillers, such as glass fibers, carbon fibers, silane glass fibers, ceramic fibers, aramid fibers, metal fibers, fibers of potassium titanate, silicon carbide, calcium silicate, wollastonite, and so forth, and natural fibers can be used. Non-fibrous fillers, such as glass beads, glass flakes, barium sulfate, clay, pyrophyllite, bentonite, sericite, mica, talc, attapulgite, ferrite, calcium silicate, calcium carbonate, glass beads, zeolite, milled fibers, and calcium sulfate, can also be used.

In the present embodiment, the filler is not an essential component. When the filler is added, the filler content is not particularly limited as long as it does not impair the effects of the present disclosure. The amount of the filler mixed is, for example, preferably 1 part or more by mass, more preferably 10 parts or more by mass, and preferably 600 parts or less by mass, more preferably 200 parts or less by mass, based on 100 parts by mass of the PAS resin. Such a range is preferred because the PAS resin composition exhibits good mechanical strength and moldability.

Preferably, the PAS resin composition or the constituent component of the present embodiment is substantially free of cellulose nanofibers. The phrase "substantially free of cellulose nanofibers" indicates that when the cellulose nanofibers are contained in the PAS resin composition or the constituent component, the cellulose nanofiber content based on the total amount of the PAS resin and the cellulose nanofibers is preferably less than 0.5% by mass, more preferably less than 0.3% by mass. When the cellulose nanofiber content is 0.5% or more by mass, the cellulose nanofibers are decomposed during preparation of the PAS resin composition to cause carbonization or generation of decomposition gas, thereby reducing the mechanical strength.

The PAS resin composition of the present embodiment preferably contains a silane coupling agent. In the present embodiment, when a silane coupling agent is further contained as a constituent component constituting the gear, good moldability, particularly releasability, is provided, and mechanical strength is further improved.

The silane coupling agent that can be contained in the PAS resin composition of the present embodiment is not particularly limited as long as it does not impair the effects of the present disclosure. Preferred examples thereof include silane coupling agents having a functional group, such as an epoxy group, an isocyanato group, an amino group, or a hydroxy group, reactive with a carboxy group. Examples of such silane coupling agents include epoxy group-containing alkoxysilane compounds, such as γ-glycidoxypropyltrimethoxysilane, γ-glycidoxypropyltriethoxysilane, and β-(3,4-epoxycyclohexyl) ethyltrimethoxysilane; isocyanato group-containing alkoxysilane compounds, such as γ-isocyanatopropyltrimethoxysilane, γ-isocyanatopropyltriethoxysilane, γ-isocyanatopropylmethyldimethoxysilane, γ-isocyanatopropylmethyldiethoxysilane, γ-isocyanatopropylethyldimethoxysilane, γ-isocyanatopropylethyldiethoxysilane, and γ-isocyanatopropyltrichlorosilane; amino group-containing alkoxysilane compounds, such as γ-(2-aminoethyl) aminopropylmethyldimethoxysilane, γ-(2-aminoethyl) aminopropyltrimethoxysilane, and γ-aminopropyltrimethoxysilane; and hydroxy group-containing alkoxysilane compounds, such as γ-hydroxypropyltrimethoxysilane and γ-hydroxypropyltriethoxysilane. In the present disclosure, the silane coupling agent is not an essential component. When the silane coupling agent is contained, the amount contained is not particularly limited as long as it does not impair the effects of the present disclosure. The silane coupling agent is preferably in the range of 0.01 parts or more by mass, more preferably 0.1 parts or more by mass, to preferably 10 parts or less by mass, more preferably 5 parts or less by mass, based on 100 parts by mass of the PAS resin. Such a range is preferred because the PAS resin composition has good moldability, particularly releasability, and the molded product exhibits excellent adhesion to the epoxy resin and has further improved mechanical strength.

The PAS resin composition of the present embodiment can contain a thermoplastic elastomer as an optional component, as needed. Examples of the thermoplastic elastomer include polyolefin-based elastomers, fluorine-containing elastomers, and silicone-based elastomers. Of these, polyolefin-based elastomers are preferred. When these elastomers are added, the amount added is not particularly limited as long as the effects of the present disclosure are not impaired. The amount added is preferably in the range of 0.01 parts or more by mass, more preferably 0.1 parts or more by mass, to preferably 10 parts or less by mass, more preferably 5 parts or less by mass, based on 100 parts by mass of the PAS resin. Such a range is preferred because the impact resistance of the resulting PAS resin composition is improved.

Examples of the polyolefin-based elastomer include a homopolymer of an α-olefin, a copolymer of two or more α-olefins, or a copolymer of one or more α-olefins and a vinyl polymerizable compound having a functional group. In this case, the α-olefin may be an α-olefin having 2 to 8 carbon atoms, such as ethylene, propylene, or 1-butene. Examples of the functional group include a carboxy group, an acid anhydride group (-C(=O)OC(=O)-), an epoxy group, an amino group, a hydroxy group, a mercapto group, an isocyanato group, and an oxazoline group. Examples of the vinyl polymerizable compound having a functional group include one or two or more of vinyl acetate; α,β-unsaturated carboxylic acids, such as (meth)acrylic acid; alkyl esters of α,β-unsaturated carboxylic acids, such as methyl acrylate, ethyl acrylate, and butyl acrylate; metal salts of α,β-unsaturated carboxylic acids, such as ionomers (metals include alkali metals, such as sodium, alkaline-earth metals, such as calcium, zinc, and so forth); glycidyl esters of α,β-unsaturated carboxylic acids, such as glycidyl methacrylate; α,β-unsaturated dicarboxylic acids, such as maleic acid, fumaric acid, and itaconic acid; and derivatives of the above α,β-unsaturated dicarboxylic acids (monoesters, diesters, and acid anhydrides). The above-mentioned thermoplastic elastomers may be used alone or in combination of two or more.

In addition to the above components, the PAS resin composition of the present embodiment may further contain, as an optional component, a synthetic resin (hereafter, simply referred to as a "synthetic resin"), such as a polyester resin, a polyamide resin, a polyimide resin, a polyether imide resin, a polycarbonate resin, a polyphenylene ether resin, a polysulfone resin, a polyether sulfone resin, a polyether ether ketone resin, a polyether ketone resin, a polyarylene resin, a polyethylene resin, a polypropylene resin, a polytetrafluoroethylene resin, a polydifluoroethylene resin, a polystyrene resin, an ABS resin, a phenolic resin, a urethane resin, or a liquid crystal polymer, as appropriate depending on the application. In the present disclosure, the synthetic resin is not an essential component. When the synthetic resin is contained, the proportion thereof is not particularly limited as long as the synthetic resin does not impair the effects of the present disclosure. Different proportions are used in accordance with different purposes. The proportion cannot be generally specified. The proportion of the synthetic resin contained in the PAS resin composition according to the present embodiment is, for example, in the range of 5 parts or more by mass and about 15 parts or less by mass based on 100 parts by mass of the PAS resin. In other words, the proportion of the PAS resin in the total of the PAS resin and the synthetic resin is preferably in the range of (100/115) or more, more preferably in the range of (100/105) or more, on a mass basis.

The PAS resin composition of the present embodiment may contain, as optional components, known and commonly used additives, such as colorants, antistatic agents, antioxidants, heat stabilizers, UV stabilizers, UV absorbers, foaming agents, flame retardants, flame retardant assistants, rust inhibitors, and coupling agents, as needed. These additives are not essential components and may be appropriately adjusted and used according to the purpose or application so as not to impair the effects of the present disclosure, for example, in a range of preferably 0.01 parts or more by mass and preferably 1,000 parts or less by mass based on 100 parts by mass of the PAS resin.

<Preferred Embodiment of PAS Resin Composition>

The PAS resin composition, which is a constituent component of the gear of the present embodiment, according to a preferred embodiment contains a PAS resin having a melt viscosity (V6) of 50 to 4,000 Pa·s, a silane coupling agent, and a filler, and the total amount of the PAS resin, the silane coupling agent, and the filler contained is preferably 50% to 100% by mass, more preferably 70% to 100% by mass, based on the total amount (100% by mass) of the PAS resin composition.

When the PAS resin composition having the above composition is used as a constituent component of the gear of

the present embodiment, the dimensional change rate and/or water absorption rate of the gear can be easily controlled within a predetermined range (for example, the dimensional change rate due to a temperature change is 0.7% or less, and/or the water absorption rate is 0.5% or more).

In that case, the gear, worm gear, and robot of the present embodiment can have a lower dimensional change rate due to heat and water absorption, and can have better durability and dimensional accuracy under high-temperature and high-humidity conditions. It is preferable that the PAS resin have a carboxy group in its molecule, and the amount of the carboxyl group present in the molecular structure of the PAS resin be 10 μmol or more and 200 μmol or less per 1 g of the PAS resin.

The carboxyl group has reactivity with the coupling agent; hence, the combined use of the carboxy group with the coupling agent can provide the effect of improving gear durability.

The PAS resin composition of the present embodiment contains a main component and, if necessary, another optional component. Examples of a method for producing the PAS resin composition used in the present disclosure include, but are not limited to, a method in which a main component and, if necessary, an optional component are blended and melt-kneaded, more specifically, a method in which, if necessary, the components are dry-mixed uniformly in a tumbler or a Henschel mixer or the like, and then the components are fed into a twin-screw extruder and melt-kneaded.

The melt-kneading can be performed by heating the resin to a temperature range in which the resin temperature is higher than or equal to the melting point of the PAS resin, preferably higher than or equal to the melting point + 10°C. More preferably, the melt-kneading can be performed by heating the resin to a temperature ranging from the melting point + 10°C or higher, still more preferably the melting point + 20°C or higher, to more preferably the melting point + 100°C or lower, still more preferably the melting point + 50°C or lower.

The melt-kneader is preferably a twin-screw kneading extruder from the viewpoint of dispersibility or productivity. For example, the melt-kneading is preferably performed while appropriately adjusting the output rate of the resin component in the range of 5 to 500 (kg/hr) and the screw rotation speed in the range of 50 to 500 (rpm). The melt-kneading is more preferably performed under conditions where the ratio (output rate/screw rotation speed) is in the range of 0.02 to 5 (kg/hr/rpm). The addition and mixing of the respective components to the melt-kneader may be performed simultaneously or may be performed in portions. For example, in the case of adding an additive among the components, it is preferable to charge the additive into the twin-screw kneading extruder from a side feeder of the extruder from the viewpoint of dispersibility. The position of the side feeder is preferably such that the ratio of the distance from the extruder resin inlet (top feeder) to the side feeder to the total length of the screws of the twin-screw kneading extruder is 0.1 or more, more preferably 0.3 or more. The ratio is preferably 0.9 or less, more preferably 0.7 or less.

The PAS resin composition according to the present disclosure obtained by melt-kneading in this manner is a molten mixture containing the main component, an optional component added as necessary, and a component derived therefrom. After the melt-kneading, a known method, for example, extrusion molding of the PAS resin composition in a molten state into a strand shape, processing it into pellets, chips, granules, powder, or the like, and preliminary drying in a temperature range of 100°C to 150°C, if necessary, is preferably performed.

(Preferred Embodiment of Gear)

A worm wheel, a worm, and a worm gear, which are preferred embodiments of the gear according to the present embodiment, will be mainly described with reference to the accompanying drawings.

<Worm Wheel>

Fig. 1 is a schematic view illustrating a configuration of a worm wheel 1 according to an embodiment of the present disclosure. The configuration of the worm wheel 1 according to an embodiment will be mainly described with reference to Fig. 1.

The worm wheel 1 of the present embodiment is what is called a spur gear (spur wheel). More specifically, the worm wheel 1 has first toothed portions 2 that protrude radially outward, and a (substantially) disk-shaped main body portion with the first toothed portions 2 provided on the outer circumference. The first toothed portions 2 and grooves 3 provided between adjacent first toothed portions 2 are arranged periodically.

In other words, the worm wheel 1 has a shape in which the first toothed portions 2 are arranged at predetermined intervals on a (substantially) disk-shaped side surface. A through-hole 4 through which a shaft body such as a camshaft is to be inserted is provided in the central portion of the main body portion. If necessary, a recessed portion in which a flange of the camshaft is to be disposed may be provided in the outer circumferential portion of the through-hole 4 on one surface of the main body portion. If necessary, a recessed portion in which a mounting member (for example, a setscrew mechanism) for mounting another gear or the like to the camshaft is disposed may be provided on the other surface of the main body portion around the outer circumferential portion of the through-hole 4.

The worm wheel 1 has a rotating shaft. The rotating shaft is rotatably supported by a worm wheel base via a

bearing and can serve as an output side of a driving force of a worm gear 100 described later.

A preferred gear of the present embodiment is a worm wheel 1 that has the first toothed portions 2 provided on its outer circumference and that contains, as a constituent component, the PAS resin having a melt viscosity (V6) of 50 to 4,000 Pa·s.

The worm wheel 1 contains the PAS resin or the PAS resin composition and thus has a low dimensional change rate due to heat and water absorption, and excellent durability and dimensional accuracy under high-temperature and high-humidity conditions. This is believed to be more effective in reducing rattling or noise caused by the meshing of the second toothed portion 5 of a worm 10 and the first toothed portions 2 or caused by combination with another member.

Fig. 1 illustrates an example in which the worm wheel 1 is composed of only the PAS resin or the PAS resin composition. However, the worm wheel 1 may be partially composed of the PAS resin or the PAS resin composition. For example, only the first toothed portions 2 may be composed of the PAS resin or the PAS resin composition. A portion around the through-hole 4 through which the shaft body, such as a camshaft, is to be inserted may be composed of a metal material. Examples of the metal material include, but are not limited to, metals containing one or more selected from iron, steel materials, stainless steel, aluminum, aluminum alloys, magnesium, magnesium alloys, copper, copper alloys, titanium, and titanium alloys.

<Worm>

Fig. 2 is a schematic view illustrating a configuration of the worm 10 according to an embodiment of the present disclosure. The configuration of the worm 10 according to an embodiment will be mainly described with reference to Fig. 2.

The worm 10 of the present embodiment is a (substantially) cylindrical gear having a tooth surface formed by continuously cutting a groove 6 in a helical shape. More specifically, the worm 10 has the second toothed portion 5, protruding radially outward, in a helical shape and a (substantially) cylindrical worm shaft 8 with the second toothed portion 5 provided on its outer circumference. The second toothed portion 5 and the groove 6 provided between adjacent turns of the second toothed portion 5 are arranged periodically. The worm 10 also has a worm shaft 8, the second toothed portion 5 having a helical shape, and a fixing hole 7 through which a shaft or an insertion shaft (not illustrated) is inserted or fixed. The worm 10 can be rotatably mounted on a worm base equipped with a bearing. Thus, if necessary, a bearing portion (not illustrated) to be fixed to the bearing of the worm base configured to rotatably support the worm 10 may be provided at one end and/or the other end of the worm shaft 8.

One shaft end of the worm 10 is connected to a rotating shaft of a motor (not illustrated) serving as a power source, and can serve as the input side of the driving force of the worm gear 100 described later. Thus, the fixing hole 7 can be a portion that is connected to the rotating shaft of the motor (not illustrated) serving as a power source.

The second toothed portion 5 is provided coaxially with the worm shaft 8 and has a shape formed by continuously cutting the side surface of a cylinder having a diameter larger than the worm shaft 8 into a helical shape, for example. The groove 6 and the second toothed portion 5 may be formed by continuous cutting into a helical shape rotating in the opposite direction to that illustrated in Fig. 2.

A preferred gear of the present embodiment is the worm 10 having the second toothed portion 5 provided on its outer circumference and containing, as a constituent component, the PAS resin having a melt viscosity (V6) of 50 to 4,000 Pa·s.

The worm 10 contains the PAS resin or the PAS resin composition and thus has a low dimensional change rate due to heat and water absorption, and excellent durability and dimensional accuracy under high-temperature and high-humidity conditions. This is believed to be effective in reducing rattling or noise caused by the meshing of the first toothed portions 2 of the worm wheel 1 and the second toothed portion 5 and caused by combination with another member, such as the insertion shaft of the motor.

Fig. 2 illustrates an example in which the worm 10 is composed of only the PAS resin or the PAS resin composition. However, the worm 10 may be partially composed of the PAS resin or the PAS resin composition. For example, only the second toothed portion 5 may be composed of the PAS resin or the PAS resin composition. The worm shaft 8 or a portion around the fixing hole 7 may be composed of a metal material. Examples of the metal material include, but are not limited to, metals containing one or more selected from iron, steel materials, stainless steel, aluminum, aluminum alloys, magnesium, magnesium alloys, copper, copper alloys, titanium, and titanium alloys.

<Worm Gear>

Fig. 3 is a schematic view illustrating a configuration of a worm gear 100 according to an embodiment of the present disclosure. The configuration of the worm gear 100 according to an embodiment will be mainly described with reference to Fig. 3.

The worm gear 100 of the present embodiment is a gear having the worm wheel 1 and the worm 10. The worm gear 100 is a mechanism for transmitting rotational motion and includes the worm 10 having the tooth surface with the

second toothed portion 5 having a helical shape, and the worm wheel 1 having the tooth surface with the first toothed portions 2 meshing with the second toothed portion 5 having the helical shape.

The worm wheel 1 is supported so as to be rotatable about a rotation axis that is different in direction from the worm 10, and has a tooth surface provided with the first toothed portions 2 on the outer circumference thereof. The worm 10 is supported so as to be rotatable about a rotation axis that is different in direction from the worm wheel 1, and has a tooth surface provided with the second toothed portion 5 having a helical shape on the outer circumference. The toothed portions 2 (first toothed portions 2) of the worm wheel 1 mesh with the toothed portion 5 (second toothed portion 5) of the worm 10.

When the worm 10 rotates in the direction of an arrow θ1, the second toothed portion 5 of the worm 10 moves in the direction of an arrow X1, and the worm wheel 1 is driven to rotate in the direction indicated by an arrow φ1. Conversely, when the worm wheel 1 is driven to rotate in the direction of the arrow φ1, the toothed portion 5 of the worm 10 moves in the direction of the arrow X1, and the worm 10 is driven to rotate in the direction of the arrow θ1.

When the worm 10 rotates in the direction of an arrow 02, the toothed portion 5 of the worm 10 moves in the direction of an arrow X2, and the worm wheel 1 is driven to rotate in the direction indicated by an arrow φ2. Conversely, when the worm wheel 1 rotates in the direction indicated by the arrow φ2, the toothed portion 5 of the worm 10 moves in the direction of the arrow X2, and the worm 10 is driven to rotate in the direction of the arrow θ2.

A preferred gear in the present embodiment is the worm gear 100 that includes the worm wheel 1 having the first toothed portions 2 provided on its outer circumference and containing, as a constituent component, the PAS resin having a melt viscosity (V6) of 50 to 4,000 Pa·s, and that includes the worm 10 having the second toothed portion 5 provided on its outer circumference, the second toothed portion 5 meshing with the first toothed portions 2, and containing, as a constituent component, the PAS resin having a melt viscosity (V6) of 50 to 4,000 Pa·s.

Each of the worm wheel 1 and the worm 10 constituting the worm gear 100 contains the PAS resin or the PAS resin composition and thus has a low dimensional change rate due to heat and water absorption, and excellent durability and dimensional accuracy under high-temperature and high-humidity conditions.

In this way, the worm wheel 1 and the worm 10 mesh optimally with each other; hence, this is considered to be effective in reducing rattling or noise due to the combination with other members such as the insertion shaft of the motor.

<Physical Properties of Gear>

In the gear of the present embodiment, the dimensional change rate due to water absorption is preferably 0.2% or less, more preferably 0.15% or less, and still more preferably 0.1% or less.

In general, the water absorption phenomenon of a resin is a phenomenon in which water enters the amorphous portion of the resin to cause the polymer chains to swell. Thus, the dimensional change and the amount of water held between the polymer chains are in a proportional relationship. Therefore, when the dimensional change rate due to water absorption is 0.2% or less, even in the case where the gear of the present embodiment is used for a worm wheel, a worm, or the like, the meshing between the toothed portions and the combination with another member, such as an insertion shaft of the motor, are less likely to be affected, thereby providing better dimensional accuracy under high humidity. That is, since the gear of the present embodiment contains the PAS resin having low water absorbency as a constituent component, the gear has a low dimensional change rate due to water absorption and can have excellent dimensional accuracy under high humidity.

With regard to a method for measuring the dimensional change rate due to water absorption, as described in the section of Examples below, the rate of change (%) in the tip diameter of the gear of the present embodiment before and after immersion in water = $\{(h1 - h0)/h0\} \times 100$ was defined as a dimensional change rate due to water absorption.

The term "tip diameter" used in the present specification refers to a numerical average value of values obtained by measuring the tip diameter of a gear at 10 freely-selected points. The tip diameter is obtained by measuring the diameter of a circle connecting the tips of the toothed portions. For example, as illustrated in Fig. 1, the tip diameter Ra refers to the length of a line connecting the tip of one of the toothed portions 2 of a gear (for example, the worm wheel 1), the central portion of the gear (for example, the worm wheel 1), and the tip of another toothed portion 2 opposite the one of the toothed portions 2 of the gear (for example, the worm wheel 1). The dimensional change rate (%) in the present specification refers to the ratio, expressed as an absolute value, where the length at a reference point (for example, before water absorption or temperature change) in water absorption or a temperature change is the denominator, and the increase or decrease in length from the reference point to a comparison point due to water absorption or a temperature change is the numerator. Therefore, strictly speaking, the dimensional change rate (%) due to a temperature change from 0°C to 80°C is the absolute value of the following formula (I).

In the gear of the present embodiment, the dimensional change rate (%) due to a temperature change from 0°C to 80°C is represented by the following formula (I):

[Math. 3]

$$\text{Dimensional change rate (\%)} = \frac{L_{80} - L_0}{L_0} \times 100$$

(where in the above formula (I), $L_{80}$ is the tip diameter of the gear at 80°C, and $L_0$ is the tip diameter of the gear at 0°C), and the dimensional change rate (%) is preferably 0.7% or less, more preferably 0.65% or less, and still more preferably 0.6% or less.

Therefore, when the dimensional change rate due to a temperature change is 0.7% or less, even in the case where the gear of the present embodiment is used for a worm wheel, a worm, or the like, the meshing between the toothed portions and the combination with another member, such as an insertion shaft of the motor, are less likely to be affected, and better durability and dimensional accuracy are exhibited at high temperatures. That is, the gear of the present embodiment contains, as a constituent component, the PAS resin or the PAS resin composition having a low linear thermal expansion coefficient and thus has a low dimensional change rate due to heat and can have excellent durability and dimensional accuracy even at high temperatures.

In the gear of the present embodiment, the module is preferably within the range of 0.5 to 25 mm.

In the gear of the present embodiment, the tooth thickness is preferably within the range of 0.8 mm to 40 mm.

In the gear of the present embodiment, the pitch diameter is preferably within the range of 1.5 mm to 3,200 mm.

The module and the tooth thickness are related to each other by the relationship 1.6 × module = tooth thickness (mm). The module is expressed as [base circle diameter (in units of millimeters)] ÷ (number of teeth).

<Method for Producing Gear>

The gear of the present embodiment is preferably formed by molding the PAS resin or the PAS resin composition. A method for producing a gear according to the present embodiment includes a step of melt-molding the PAS resin composition. The following is a detailed description.

The PAS resin or the PAS resin composition, which is a constituent component of the gear of the present embodiment, can be subjected to various molding processes, such as injection molding, gas injection molding, compression molding, extrusion molding for composites, sheets, pipes, etc., pultrusion molding, blow molding, and transfer molding, and is suitable for injection molding applications because of its excellent releasability. When molding is performed by injection molding, various molding conditions are not particularly limited, and molding can be performed by a common method. For example, after a step of melting the PAS resin composition in an injection molding machine at a resin temperature in a temperature range higher than or equal to the melting point of the PAS resin, preferably in a temperature range higher than or equal to the melting point + 10°C, more preferably in a temperature range from the melting point + 10°C to the melting point + 100°C, and still more preferably in a temperature range from the melting point + 20°C to the melting point + 50°C, the PAS resin composition may be injected into a mold from a resin discharge port. In this case, the mold temperature may be set within a known temperature range, for example, in the range of room temperature (23°C) to 300°C, preferably 120°C to 180°C.

The worm gear 100 as described above can be used in any machine. For example, the worm gear 100 can be used for industrial robot arms, actuators for medical applications, plumbing parts, and automotive parts. In the following, an embodiment in which the worm gear 100 is used for a robot, more specifically, a robot arm, will be described as an example.

Fig. 4 is a schematic view of an arm mechanism 1000 for a robot, the arm mechanism having the worm gear 100 illustrated in Fig. 3.

The arm mechanism 1000 for a robot includes, in addition to the worm gear 100, a first arm A1 connected to, for example, a robot main body, and a second arm A2 including a portion operating at the tip of the arm mechanism 1000 for a robot. The arm mechanism 1000 for a robot includes the worm gear 100 at a joint portion J located between the first arm A1 and the second arm A2.

In the arm mechanism 1000 for a robot, the worm gear 100 operates to cause the second arm A2 having a length L to perform circular motion with the joint portion J as a fulcrum. The arm mechanism 1000 for a robot drives the worm gear 100 based on a control signal to move the tip of the second arm A2 to a specified position.

In Fig. 4, the worm gear 100 is used in an arm mechanism for a robot. However, the use of the worm gear 100 is not limited thereto. The worm gear 100 may be used in any other component in addition to or instead of the arm mechanism for a robot. A robot may include the worm gear 100 in any component that requires a gear drive.

EXAMPLES

Hereinafter, the present disclosure will be described using examples and comparative examples, but the present

disclosure is not limited to these examples. Hereinafter, "%" or "part" is based on mass unless otherwise specified.

<Raw Materials Used in Examples and Comparative Examples>

<PAS Resin>

Polyphenylene sulfide resin (hereinafter, referred to as a "PPS resin"), melt viscosity: 30 Pa·s, carboxy group: 30 μmol/g
PPS resin, melt viscosity: 50 Pa·s, carboxy group: 30 μmol/g
PPS resin, melt viscosity: 300 Pa·s, carboxy group: 30 μmol/g
PPS resin, melt viscosity: 4,000 Pa·s, carboxy group: 30 μmol/g
PPS resin, melt viscosity: 7,000 Pa·s, carboxy group: 30 μmol/g

<Silane Coupling Agent>

Epoxy silane: 3-glycidoxypropyltrimethoxysilane "SH-6040" manufactured by Dow Corning Corp.
Aminosilane: N-2-(aminoethyl)-3-aminopropyltrimethoxysilane "KBM-603" manufactured by Shin-Etsu Chemical Co., Ltd.

<Other Resins>

POM (polyacetal resin) "M90-44" manufactured by Polyplastics Co., Ltd.
PA6 (polyamide resin) "CM1017" manufactured by Toray Industries, Inc.

<Evaluation Methods in Examples and Comparative Examples>

(1) Quantification of Carboxy Group

The amount of carboxy groups in the PPS resins obtained in examples and comparative examples was determined by the following procedure.
As a pretreatment, the PPS resin used in each of Examples and Comparative Examples was once dissolved in dimethylimidazolidinone (DMI) at 210°C in an inert atmosphere, and then cooled to precipitate the PPS resin again. Then, the resulting slurry was washed well with ion-exchange water many times, filtered, once adjusted to a pH of 2.5 or less with hydrochloric acid, and washed again with ion-exchange water many times. The resulting cake was dried in a hot air dryer at 120°C. The resulting dry solid was used as a sample.
Each of the samples obtained as described above was pressed into a disk shape by a pressing machine, and was subjected to measurement with an FT-IR microspectrometer. Of the absorptions obtained, the relative intensity of the absorption at 1,705 $cm^{-1}$ to the absorption at 2,666 $cm^{-1}$ was determined. Separately, a predetermined amount of p-chlorophenylacetic acid was mixed with the PPS resin used in each of Examples and Comparative Examples, and an absorption curve was obtained by the same procedure. The relative intensity of the absorption intensity at 1,705 cm-1 to the absorption intensity at 2,666 cm-1 in the absorption curve was plotted to obtain a calibration curve, and the numerical value obtained from the calibration curve was regarded as the amount of carboxy groups contained in the PPS resin.

(2) Measurement of Dimensional Change Rate (%)

(2-1) Measurement of Dimensional Change Rate of Gear due to Water Absorption

Each of the gears of each worm wheel and each worm produced in Examples and Comparative Examples was dried at 50°C for 24 hours and brought to room temperature (23°C) in a desiccator. The tip diameter of the gear after drying was measured at 10 freely-selected toothed portions. The number average value thereof was defined as the tip diameter (h0) of the gear after drying. Thereafter, the gear was immersed in distilled water at room temperature (20°C to 28°C) for 80 days. The tip diameter of the gear after immersion was measured at 10 freely-selected positions. The number average value thereof was defined as the tip diameter (h1) of the gear after immersion. The rate of change (%) in the tip diameter before and after immersion = $\{(h1 - h0)/h0\} \times 100$ was defined as the dimensional change rate due to water absorption.

(2-2) Measurement of Dimensional Change Rate due to Temperature Change of Gear

The dimensional change rate (%) due to a temperature change from 0°C to 80°C in each of the gears of each worm wheel and each worm produced in Examples and Comparative Example was defined by the following formula (I):

[Math. 4]

$$\text{Dimensional change rate (\%)} = \frac{L_{80} - L_0}{L_0} \times 100$$

(where in the above formula (I), $L_{80}$ is the tip diameter of the gear at 80°C, and $L_0$ is the tip diameter of the gear at 0°C).

After the gear was dried at 50°C for 24 hours, the gear was maintained in a thermostatic chamber set at 0°C for 1 hour. The tip diameter of the gear was measured at 10 freely-selected toothed portions within 30 seconds. The number average value was defined as the tip diameter (L0) of the gear. Thereafter, the gear was maintained in a thermostatic chamber set at 80°C for 1 hour. Then the tip diameter of the gear immediately after being removed from the thermostatic chamber was measured within 30 seconds at 10 freely-selected toothed portions. The average of the measured values was defined as the tip diameter (L80) of the gear.

(3) Evaluation of Moldability

The resulting pellets were supplied to an injection molding machine (SE-75D-HP), manufactured by Sumitomo Heavy Industries, Ltd., set at a cylinder temperature of 320°C. Injection molding was performed using a mold whose temperature was adjusted to 150°C to produce a gear. The appearance of the resulting gear was visually observed. A gear having a glossy surface and being filled with the resin up to the tooth tips was evaluated as good. A gear having no glossy surface and not being filled with the resin up to the tooth tips was evaluated as defective. A resin that was difficult to mold due to the generation of a large amount of gas during injection molding was evaluated as not moldable. A gear with a flash on its tooth tip was evaluated as a large flash.

(4) $M_w/M_{top}$ Ratio

The weight-average molecular weight ($M_w$) and the peak molecular weight ($M_{top}$) of the PPS resin were measured by gel permeation chromatography under the following measurement conditions. The $M_w/M_{top}$ ratio was calculated from the obtained $M_w$ and $M_{top}$. Six types of monodisperse polystyrenes were used for calibration.

Apparatus: Ultra-high temperature polymer molecular weight distribution measuring apparatus ("SSC-7000" manufactured by Senshu Scientific Co Ltd.)
Column: UT-805L (manufactured by Showa Denko K.K.)
Column temperature: 210°C
Solvent: 1-chloronaphthalene
Measurement method: UV detector (360 nm)

(5) Measurement of Melt Viscosity (V6)

The melt viscosity of the PPS resin was measured after the resin was held at 300°C, a load of $1.96 \times 10^6$ Pa, and L/D = 10/1 for 6 minutes with a CFT-500C flow tester manufactured by Shimadzu Corporation.

<Examples 1 to 10 and Comparative Examples 1 to 10>

The materials were blended according to the composition components and blending amounts given in Table 1. Thereafter, these compounding materials were charged into a vented twin-screw extruder "TEX-30 (trade name)" manufactured by The Japan Steel Works, Ltd., and melt-kneaded at a resin component output rate of 25 kg/hr, a screw rotation speed of 200 rpm, and a set resin temperature of 330°C to produce pellets of PPS resin compositions.

The respective parts of worms and worm wheels in Examples 1 to 10 and Comparative Examples 1 to 10 were formed by injection molding under the conditions including a cylinder temperature of 320°C and a mold temperature of 150°C using the PPS resin compositions in the form of pellets obtained above. Each worm had a shape having a module of 0.8 mm, a single thread, a right-hand helix, and a lead angle of 3.17°. The shape of each worm wheel was a helical gear having a module of 0.8, a pressure angle of 20°, a number of teeth of 38, and a lead angle of 3.17°.

The respective parts of the worms and the worm wheels in Examples 1 to 10 and Comparative Examples 1 to 10 were evaluated in various ways. The results are given in Table 1.

[Table 1]

| Table 1 | | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Material-composition | PPS composition | PPS (parts by mass) | Melt viscosity 30 Pa·s | | | | | | | | | | |
| | | | Melt viscosity 50 Pa·s | 100 | | | | | 100 | | | | |
| | | | Melt viscosity 300 Pa·s | | 100 | | 100 | 100 | | 100 | | 100 | 100 |
| | | | Melt viscosity 4000 Pa·s | | | 100 | | | | | 100 | | |
| | | | Melt viscosity 7000 Pa·s | | | | | | | | | | |
| | | Silane coupling agent (parts by mass) | Epoxysilane | | | | 0.5 | | | | | 0.5 | |
| | | | Aminosilane | | | | | 0.5 | | | | | 0.5 |
| | | CNF (parts by mass) | | | | | | | | | | | |
| | POM (parts by mass) | | | | | | | | | | | | |
| | PA66 (parts by mass) | | | | | | | | | | | | |
| Part shape | | | | worm | | | | | worm wheel | | | | |
| Moldability | Surface condition after molding | | | good | good | good | good | good | good | good | good | good | good |
| Dimensional change rate due to water absorpfion (%) | | | | 0.05 | 0.05 | 0.05 | 0.05 | 0.05 | 0.05 | 0.05 | 0.05 | 0.05 | 0.05 |
| Dimensional change rate due to temperature change (%) | | | | 0.5 | 0.5 | 0.5 | 0.5 | 0.5 | 0.5 | 0.5 | 0.5 | 0.5 | 0.5 |

[Table 2]

| Table 2 | | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|---|
| Material composition | PPS composition | PPS (parts by mass) | Melt viscosity 30 Pa·s | 100 | 100 | | 100 | 100 | | | | | |
| | | | Melt viscosity 50 Pa·s | | | | | | | | | | |
| | | | Melt viscosity 300 Pa·s | | | | | | | | | | |
| | | | Melt viscosity 4000 Pa·s | | | | | | | | | | |
| | | | Melt viscosity 7000 Pa·s | | | 100 | | | 100 | | | | |
| | | Silane coupling agent (parts by mass) | Epoxysilane | | | | | | | | | | |
| | | | Aminosilane | | | | | | | | | | |
| | | CNF (parts by mass) | | | 5 | | | 5 | | | | | |
| | POM (parts by mass) | | | | | | | | | 100 | | 100 | |
| | PA66 (parts by mass) | | | | | | | | | | 100 | | 100 |
| Part shape | | | | worm | | | worm wheel | | | worm | | worm wheel | |
| Moldability | Surface condition after molding | | | large flash | not moldable | defective | large flash | not moldable | defective | good | good | good | good |
| Dimensional change rate due to water absorption (%) | | | | - | - | - | - | - | - | 0.3 | 2 | 0.3 | 2 |
| Dimensional change rate due to temperature change (%) | | | | - | - | - | - | - | - | 1 | 0.8 | 1 | 0.8 |

The worms and the worm wheels obtained in Examples had lower dimensional change rates due to heat and water absorption than the worms and the worm wheels obtained in Comparative Examples, and were thus confirmed to have excellent durability and dimensional accuracy under high-temperature and high-humidity conditions.

In the worms and the worm wheels obtained in Comparative Examples 1 to 6, the dimensional change rate due to water absorption and the dimensional change rate due to a temperature change were not evaluated due to molding defects or the like.

This application claims the benefit of and priority to Japanese Patent Application No. 2022-107384, filed July 1, 2022, which is hereby incorporated by reference herein in its entirety.

Reference Signs List

| | |
|---|---|
| 1 | worm wheel |
| 2 | first toothed portion |
| 3 | groove |
| 4 | through-hole |
| 5 | second toothed portion |
| 6 | groove |
| 7 | fixing hole |
| 8 | worm shaft |
| 10 | worm |
| 100 | worm gear |
| Ra | tip diameter |
| A1 | first arm |
| A2 | second arm |
| J | joint portion |
| L | length |
| $\Delta\theta$ | amount of angular error |

## Claims

1. A gear, comprising a first toothed portion provided on an outer circumference thereof, the gear containing a polyarylene sulfide resin as a constituent component, and the polyarylene sulfide resin having a melt viscosity (V6) of 50 to 4,000 Pa·s.

2. The gear according to Claim 1, wherein a dimensional change rate (%) due to a temperature change from 0°C to 80°C is represented by the following formula (I):

[Math. 1]

$$\text{Dimensional change rate (\%)} = \frac{L_{80} - L_0}{L_0} \times 100$$

(where in the formula (I), $L_{80}$ is a tip diameter of the gear at 80°C, and $L_0$ is the tip diameter of the gear at 0°C), and is 0.7% or less.

3. The gear according to Claim 1 or 2, further comprising a cellulose nanofiber as the constituent component, wherein an amount of the cellulose nanofiber is less than 0.5% by mass based on a total amount of the polyarylene sulfide resin and the cellulose nanofiber.

4. The gear according to Claim 1 or 2, further comprising a silane coupling agent as the constituent component.

5. A worm gear, comprising the gear according to Claim 1 or 2, the gear serving as a worm wheel, and a worm having a second toothed portion configured to mesh with the first toothed portion of the gear,
wherein the worm contains a polyarylene sulfide resin as a constituent component, and the polyarylene sulfide resin has a melt viscosity (V6) of 50 to 4,000 Pa·s.

**6.** A gear system for a robot, comprising the worm gear according to Claim 5.

**7.** A robot, comprising the gear system for a robot according to Claim 6.

FIG. 1

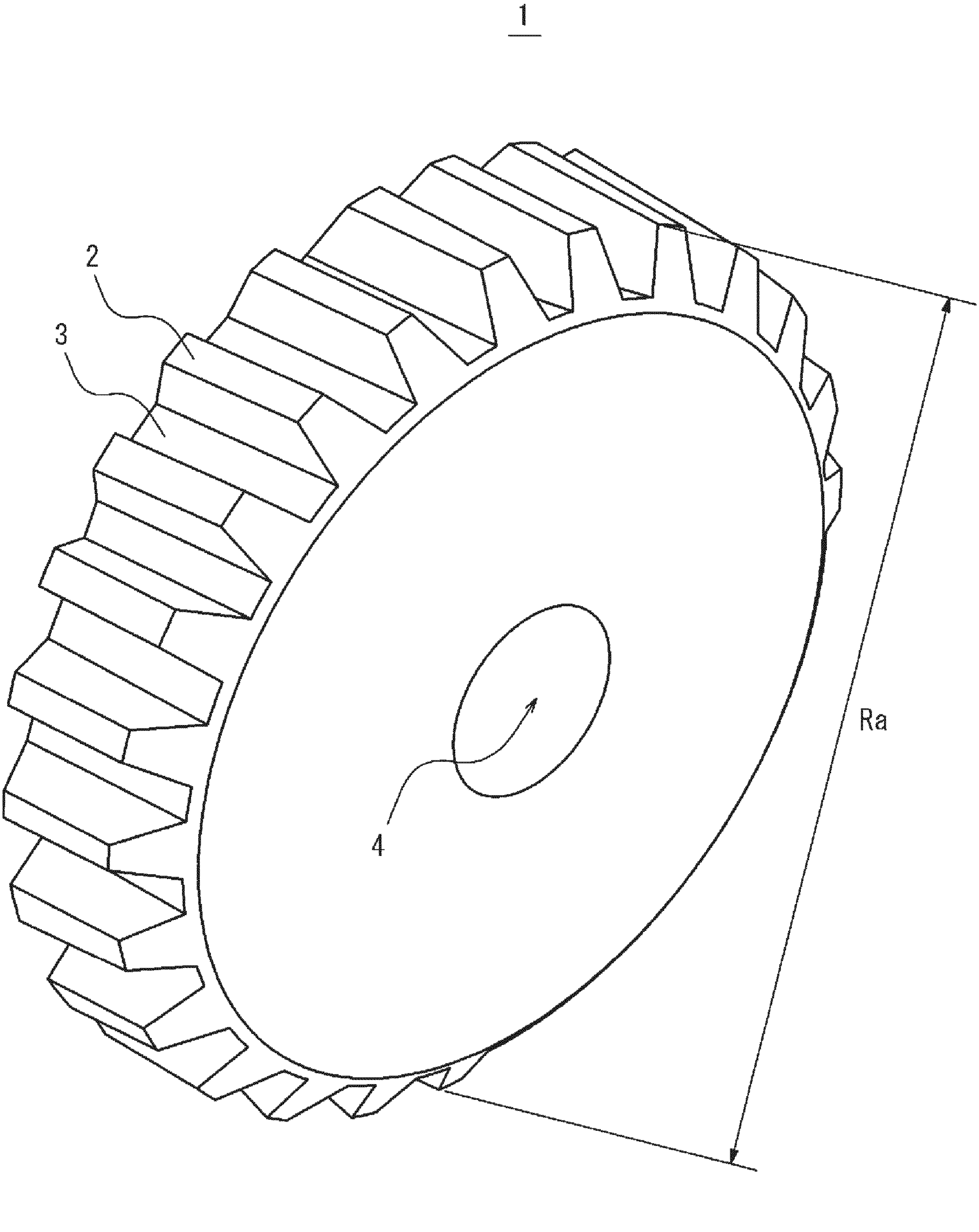

FIG. 2

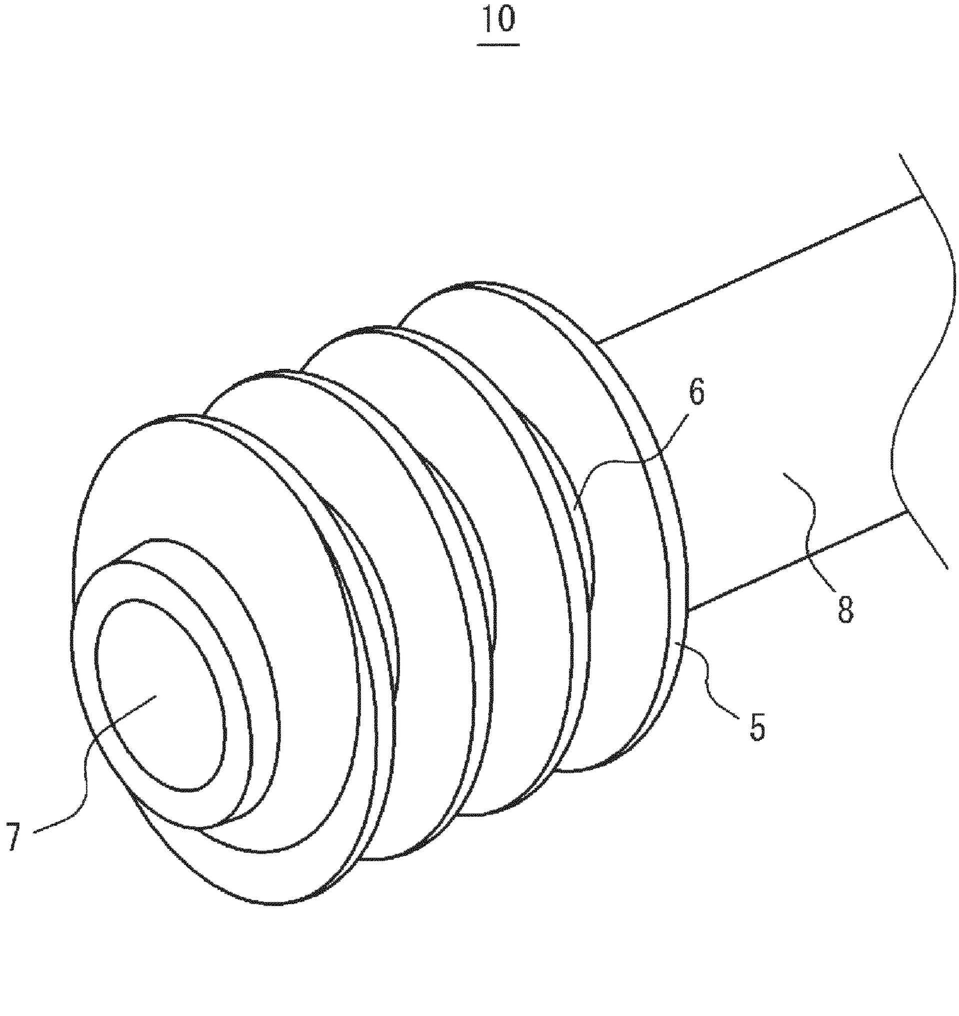

FIG. 3

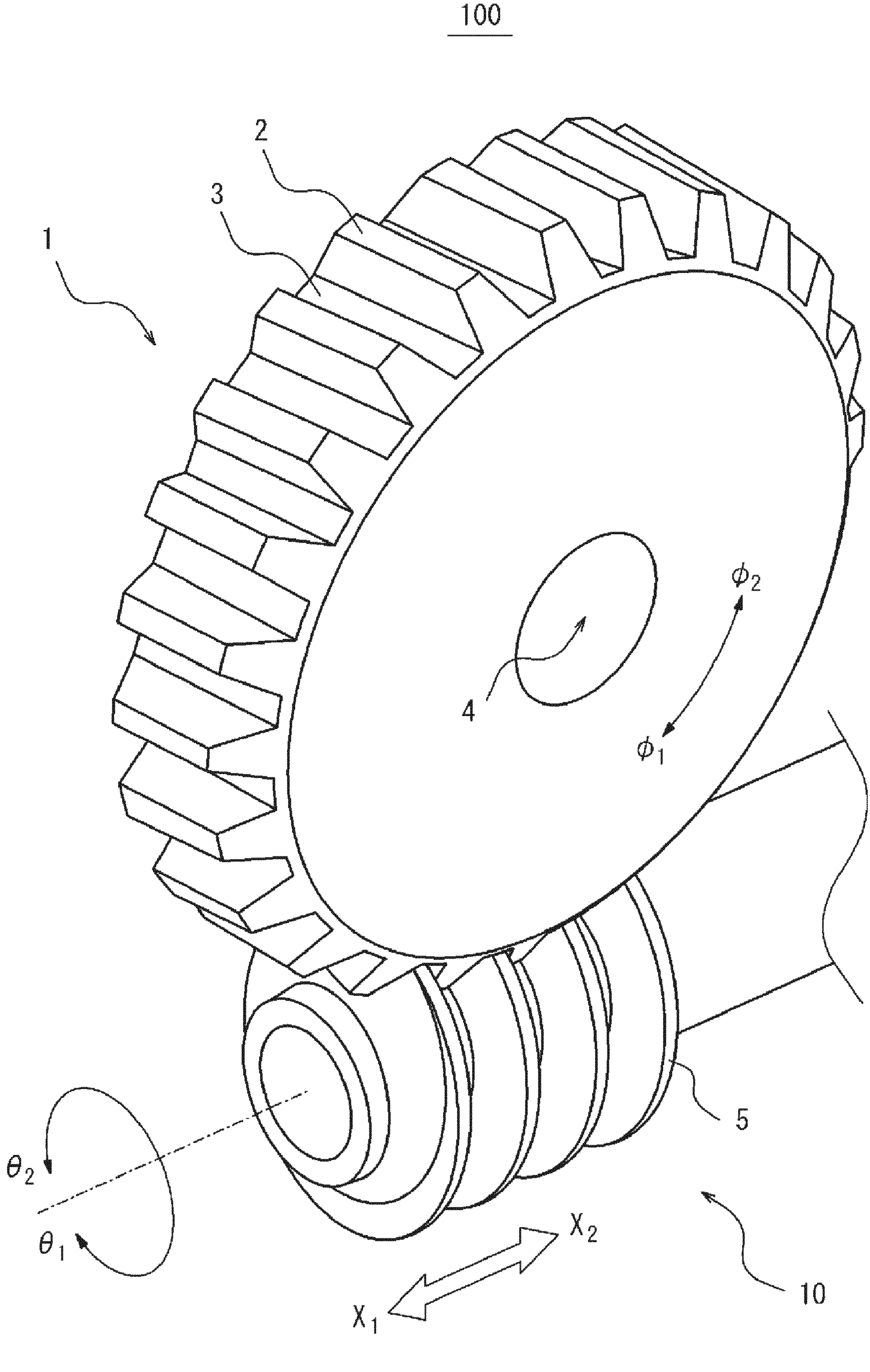

FIG. 4

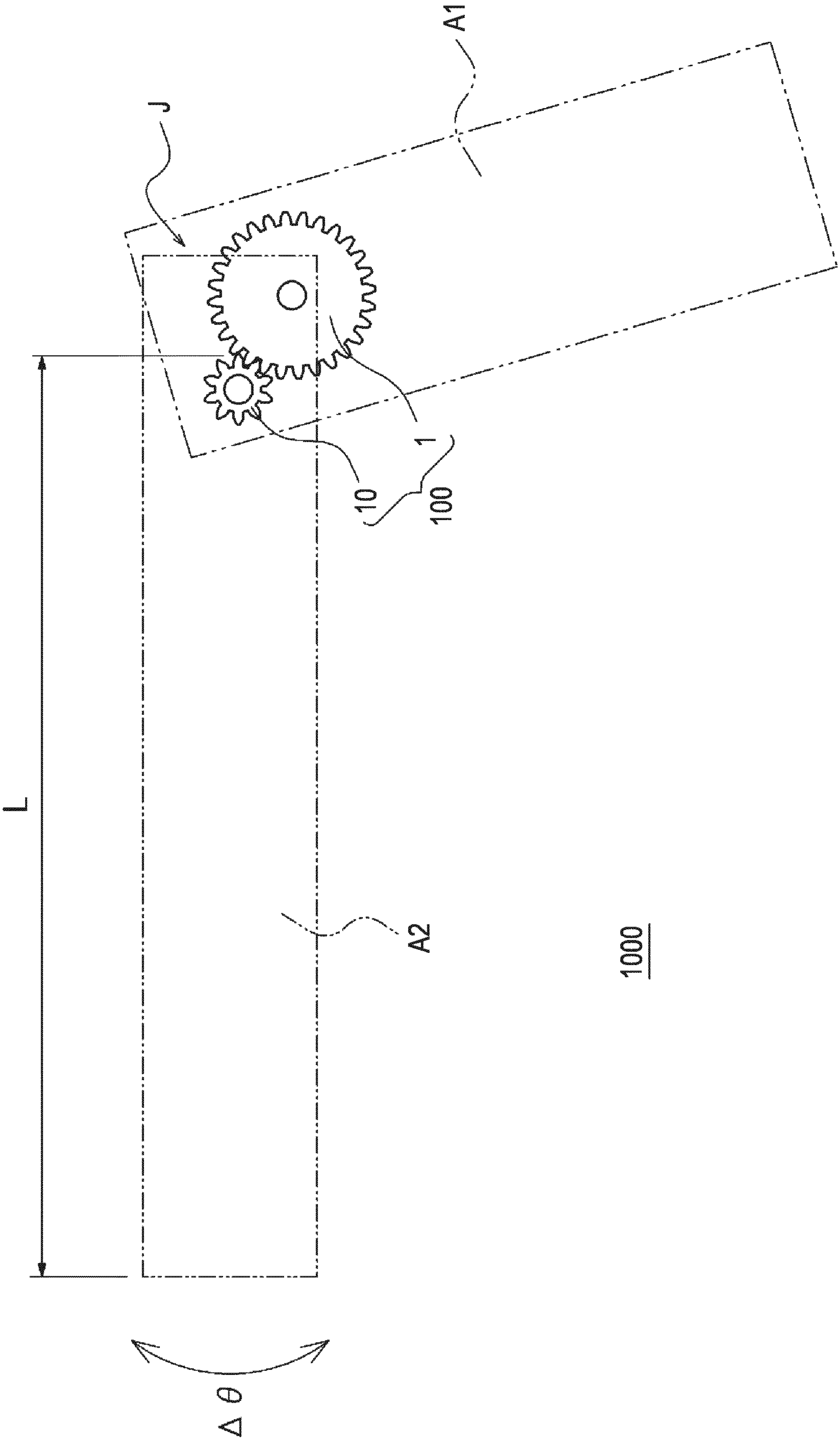

INTERNATIONAL SEARCH REPORT

International application No. PCT/JP2023/012342

**A. CLASSIFICATION OF SUBJECT MATTER**

***F16H 55/06***(2006.01)i; ***B25J 19/00***(2006.01)i; ***C08G 75/02***(2016.01)i; ***C08K 5/541***(2006.01)i; ***C08L 1/02***(2006.01)i; ***C08L 81/02***(2006.01)i
FI: F16H55/06; B25J19/00 A; C08G75/02; C08L81/02; C08L1/02; C08K5/541

According to International Patent Classification (IPC) or to both national classification and IPC

**B. FIELDS SEARCHED**

Minimum documentation searched (classification system followed by classification symbols)

F16H55/06; B25J19/00; C08G75/02; C08K5/541; C08L1/02; C08L81/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2008-20011 A (MITSUBISHI GAS CHEM. CO., INC.) 31 January 2008 (2008-01-31) paragraphs [0003], [0021], [0029], [0037], fig. 1 | 1<br>2-7 |
| Y | JP 7-88866 A (SHIN KOBE ELECTRIC MACH. CO., LTD.) 04 April 1995 (1995-04-04) paragraph [0019] | 2-7 |
| Y | JP 2014-136787 A (ASAHI KASEI CHEMICALS CORP.) 28 July 2014 (2014-07-28) paragraph [0058] | 2-7 |
| Y | JP 2017-128210 A (SHOWA CORP.) 27 July 2017 (2017-07-27) paragraphs [0028]-[0029] | 3 |
| Y | WO 2015/159712 A1 (SUMITOMO BAKELITE CO., LTD.) 22 October 2015 (2015-10-22) paragraph [0068] | 4 |
| A | JP 2020-108958 A (ASAHI KASEI CORP.) 16 July 2020 (2020-07-16) | 3 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 May 2023** | **30 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/012342**

| Patent document cited in search report | Publication date (day/month/year) | Patent family member(s) | Publication date (day/month/year) |
|---|---|---|---|
| JP 2008-20011 A | 31 January 2008 | (Family: none) | |
| JP 7-88866 A | 04 April 1995 | (Family: none) | |
| JP 2014-136787 A | 28 July 2014 | (Family: none) | |
| JP 2017-128210 A | 27 July 2017 | (Family: none) | |
| WO 2015/159712 A1 | 22 October 2015 | TW 201608155 A | |
| JP 2020-108958 A | 16 July 2020 | US 2021/0231196 A1<br>WO 2019/208514 A1<br>EP 3805611 A1<br>CN 111971491 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020108959 A
- JP 2016064714 A
- JP 7228699 A
- WO 20101058713 A
- JP 2022107384 A